# EUROPÄISCHE PATENTSCHRIFT

(11) **EP 0 968 100 B1**
(45) Veröffentlichungstag und Bekanntmachung des Hinweises auf die Patenterteilung: **16.10.2002**
(21) Anmeldenummer: 98936276.9
(22) Anmeldetag: 19.03.1998
(51) Int. Cl.: B60R 16/00

(54) **INNENLICHTMODUL MIT REGENSENSOR**
INSIDE LIGHT MODULE WITH A RAIN SENSOR
MODULE D'ECLAIRAGE INTERIEUR DOTE D'UN DETECTEUR DE PLUIE

(30) Priorität: 19.03.1997 DE 19711374
(43) Veröffentlichungstag der Anmeldung: 05.01.2000
(73) Patentinhaber: Valeo Auto-Electric Wischer und Motoren GmbH, 74321 Bietigheim-Bissingen (DE)
(72) Erfinder: SINN, Alexandra, D-74214 Schöntal (DE); BAYHA, Heiner, D-71739 Oberriexingen (DE); PHILIPPS, Werner, D-71638 Ludwigsburg (DE)
(74) Vertreter: Dreiss, Fuhlendorf, Steimle & Becker
(86) Internationale Anmeldenummer: EP9801625
(87) Internationale Veröffentlichungsnummer: WO98043852

(56) Entgegenhaltungen:
- DE-A- 4 329 983
- US-A- 4 871 917

## Beschreibung

Die Erfindung betrifft ein Innenlichtmodul für ein Kraftfahrzeug, welches vorzugsweise im Dachbereich des Kraftfahrzeugs montiert wird. Hierzu muß das Innenlichtmodul mit durch das Fahrzeug geführten elektrischen Anschlüssen verbunden werden. Damit bildet das Innenlichtmodul eine nahe dem oberen Rand der Windschutzscheibe im Fahrzeug befestigte Einheit, welche einen Informationsaustausch- und Stromversorgungsanschluß besitzt.

Es sind weiterhin Regensensoren bekannt geworden, die im Bereich der Wischfläche der Scheibenwischer an der Innenfläche der Windschutzscheibe anliegen. Derartige Regensensoren haben die Aufgabe, die Steuerung des Wischersystems an den Benetzungszustand der zu reinigenden Scheibe anzupassen. Nachteilig bei derartigen Regensensoren ist es, daß diese nicht nur in einem Bereich der Scheibe angeordnet werden müssen, welcher vom Wischer gemischt und somit für den Fahrer gut sichtbar ist. Darüber hinaus müssen die Sensoren auch noch zum Austausch von Informationen mit der Wischanlage und zur Stromversorgung mit elektrischen Anschlußleitungen verbunden werden, die über Teile der Scheibe geführt werden müssen. Es ist versucht worden, den Sensor vor Berührungen vom Fahrgastinnenraum her durch Einbau in den Fuß des Rückspiegels zu schützen. Dabei bleibt aber immer noch der störende Anblick der über die Windschutzscheibe zu dem Regensensor geführten Anschlußleitungen.

Aus der DE 43 29 983 A1 ist ein gattungsgemäßes Innenlichtmodul bekannt geworden. Diesem Stand der Technik ist allerdings nicht zu entnehmen, wie die Anordnung des Regensensors an der Innenseite der Windschutzscheibe auszuführen ist.

Aufgabe der Erfindung ist es, eine geeignete Lösung für die Anordnung eines Regensensors im Scheibenbereich zu finden, die auch ästhetisch entsprechend sein soll sowie die Montage des Regensensors zu erleichtern. Außerdem soll ein guter Übergang der von dem Regensensor abgegebenen Strahlung in die Scheibe gewährleistet werden.

Die Aufgabe wird durch die sich aus dem kennzeichnenden Teil des Anspruchs 1 ergebende Merkmalskombination gelöst. Die Erfindung besteht im Prinzip also darin, den Aufbau des Innenlichtmoduls so auszugestalten, daß er die Anordnung des Regensensors an der Scheibe verbessert. Hierzu besitzt das Innenlichtmodul einen Vorsprung, der dazu dient, im im Kraftfahrzeug eingebauten Zustand des Innenlichtmoduls den an der Scheibe angeordneten Regensensor zu verdecken. Durch den Vorsprung werden somit der Regensensor sowie auch seine Zuleitungen vom Fahrgastraum her gesehen abgedeckt, wobei der Vorsprung gleichzeitig ein Schutz für die Detektoren des Sensors, dessen elektronische Schaltung und die notwendigen Zuleitungen bilden kann. Der Vorsprung wird dabei relativ schmal ausgestaltet und so hinter dem sich vorzugsweise am im Innenlichtmodul befestigten Rückspiegel angeordnet, daß sich durch die gesamte Anordnung praktisch keine zusätzliche Sichtbeeinträchtigung durch die Windschutzscheibe ergibt. Gleichzeitig ist die so gebildete Nase des Innenlichtmoduls derart ausgestaltet, daß sie bei in dem Fahrzeug eingebauten Zustand den Regensensor gegen die Scheibe drückt, so daß ein guter Übergang der von dem Regensensor abgegebenen Strahlung in die Scheibe gewährleistet ist. Das setzt voraus, daß in diesem Fall der Regensensor nicht fest mit der Scheibe verbunden ist, sondern durch die Nase bzw. den Vorsprung des Innenlichtmoduls gehalten wird. Dabei hat die Nase selbst eine gewisse Vorspannung, mit der sie gegen die Scheibe drückt.

Die Wahl des Innenlichtmoduls zur Befestigung des Regensensors wird besonders zweckmäßig durch Anwendung der Merkmale nach Anspruch 2. Dabei wird die Tatsache ausgenutzt, daß sowohl das Innenlichtmodul als auch der Sensor selbst elektrische Anschlüsse besitzen, so daß innerhalb des Moduls die zu dem Innenlicht geführte Stromversorgung auch zur Stromversorgung des Regensensors führen kann. Das kann durch interne Leitungsverbindungen innerhalb des Moduls geschehen. Das Innenlichtmodul kann außer dem Regensensor auch mit anderen Steuerungen versehen sein, wie z.B. der Steuerung für das Schiebefach, der Fernsteuerung für die Zentralverriegelung oder der Steuerung für die Beleuchtungsanzeige bzw. Warnanzeige des Einschaltzustandes der Beleuchtung. Das Modul selbst kann aber auch mit Steckanschlüssen für den Regensensor versehen sein, so daß dieser beim Einstecken in das Innenlichtmodul gleichzeitig mit den zugeordneten elektrischen Anschlüssen verbunden ist. Bei der Merkmaiskombination nach Anspruch 2 kann aber auch vorgesehen sein, daß die Anschlüsse sowohl von dem Regensensor als auch von dem Innenlicht zu einem gemeinsamen Anschlußfeld geführt sind, so daß mittels eines einzigen Steckers beide Baugruppen mit Strom versorgt bzw. zusätzlich der Regensensor und/oder das Innenlichtmodul auch noch einen Informationsaustausch mit der Wischersteuerung über das Anschlußfeld führen kann, wie dies im Zusammenhang mit Anspruch 3 ausgeführt ist. In Verbindung mit dem Regensensor ist es wichtig, daß dessen Strahlung bis zu einem Bereich der Außenfläche der Windschutzscheibe gelangt, welche durch die Wischblätter gereinigt werden. Die Nase muß also entsprechend weit heruntergezogen werden. Da bei mehreren Wischarmen der oberste auf der Scheibe gereinigte Punkt meist außerhalb der Symmetrieachse der Scheibe liegt, kann es sich empfehlen, auch die Nase außerhalb der Mittelachse des Fahrzeugs zu legen, also wahlweise mehr zur Fahrer- oder zur Beifahrerseite hin. Da in der Regel aber die gute Sicht für den Fahrer entscheidend ist, wird man die Nase bevorzugt versetzt zur Fahrerseite hin anordnen.

Um einen erleichterten Einbau des Regensensors in das Fahrzeug zu erreichen, empfiehlt sich in Weiterbildung der Erfindung die Merkmalskombination nach Anspruch 5. Danach ist der Regensensor vorbereitend bereits in das Innenlichtmodul eingefügt, so daß durch die Montage des Innenlichtmoduls gleichzeitig auch der Regensensor montiert wird. Entsprechendes gilt auch beim Anschluß der Steckverbindung des Inneniichtmoduls, durch welches gleichzeitig auch der Regensensor angeschlossen wird.

Wie weiter oben schon erwähnt, kann der Regensensor in diesem Falle durch die Vorspannung der Nase gegen die Scheibe gedrückt werden. Eine andere Lösung besteht hierzu gemäß Anspruch 6, nach der eine Federeinrichtung, die den innerhalb des Innenlichtmoduls zur Scheibe hin bewegbar angeordneten Regensensor gegen die Scheibe preßt. Dabei kann die Aufnahme so ausgestaltet sein, daß der Sensor z.B. durch Rasten in der Aufnahme beweglich angeordnet ist, aber ein Verlieren des Sensors beim Transport des Innenlichtmoduls durch die Rastmittel verhindert wird.

Bevorzugt kann das Innenlichtmodul gemäß der Merkmalskombination nach Anspruch 7 auch noch weitere Baugruppen aufnehmen wie Schalter zum Schalten des Innenlichts, einen verschwenkbaren Innenspiegel, Displays, z.B. zur Anzeige von Regelungszuständen oder Schaltzuständen und ähnliches. Die Befestigungseinrichtungen für das Innenlichtmodul können derart angeordnet werden, daß das Innenlichtmodul am Dachhimmel befestigbar ist oder auch an einem oberhalb der Windschutzscheibe befindlichen Stirnblech, an dem auch das Fahrzeugdach angeschweißt wird.

Zusammenfassend läßt sich die Erfindung und ihre Vorteile daher wie folgt angeben.

Die Integration des Regensensors in das Innenlichtmodul bietet sich vor allem für Fahrzeugkonzepte an, bei denen der Innenspiegel im Dach befestigt ist. Wird das Gehäuse des Inrienlichtmoduls so ausgeführt, daß es im Bereich hinter dem Innenspiegel die Windschutzscheibe von innen abdeckt, so kann hinter dieser Abdeckung ein Regensensor angebracht werden. Die Abdeckung muß dabei auf der Scheibe soweit nach unten ragen, daß sich der Sensor im gewischten Bereich auf der Windschutzscheibe befindet. Der Regensensor wird mechanisch in der Innenlichtabdeckung fixiert und bei Montage des Innenlichtmoduls in den Dachhimmel an die Windschutzscheibe angepreßt.

Im Gehäuse des Innenlichtmoduls ist die mechanische Fixierung für den Regensensor integriert, die Aufnahme ist so ausgestattet, daß sie den Sensor gegen die Scheibe preßt und somit die optische Kopplung zwischen Sensor und Scheibe gewährleistet.

Die Verkabelung des Regensensors kann verdeckt im Gehäuse des Innenlichtmoduls erfolgen. Eine Steckverbindung direkt zwischen Regensensor und Gehäuse des Innenlichtmoduls ist hierbei denkbar.

Die Vorteile der Integration des Regensensors in das Innen-Lichtmodul:

Der Regensensor ist vormontiert und in seiner Position fixiert. Die Verkabelung und Steckverbindungen können beim Lieferanten geprüft werden und es ergibt sich eine Reduzierung des Verkabelungsaufwandes in der Montagelinie sowie Reduzierung der Montageschnitte beim Fahrzeughersteller. Eine zusätzliche Sichtbehinderung durch den Regensensor wird vermieden, da dieser hinter dem Innenspiegel montiert ist.

Der Regensensor muß nicht an die Scheibe geklebt werden, die optische Kopplung erfolgt über Anpressen des Sensors durch das Innenlichtmodul. Weiterhin erhält man eine Erhöhung der Reparaturfreundlichkeit beim Austausch der Windschutzscheibe.

Ein Ausführungsbeispiel der Erfindung wird nachfolgend anhand der Zeichnung erläutert. Darin zeigt:
- Fig. 1: ein erstes Ausführungsbeispiel der Erfindung und
- Fig. 2: ein zweites Ausführungsbeispiel der Erfindung.

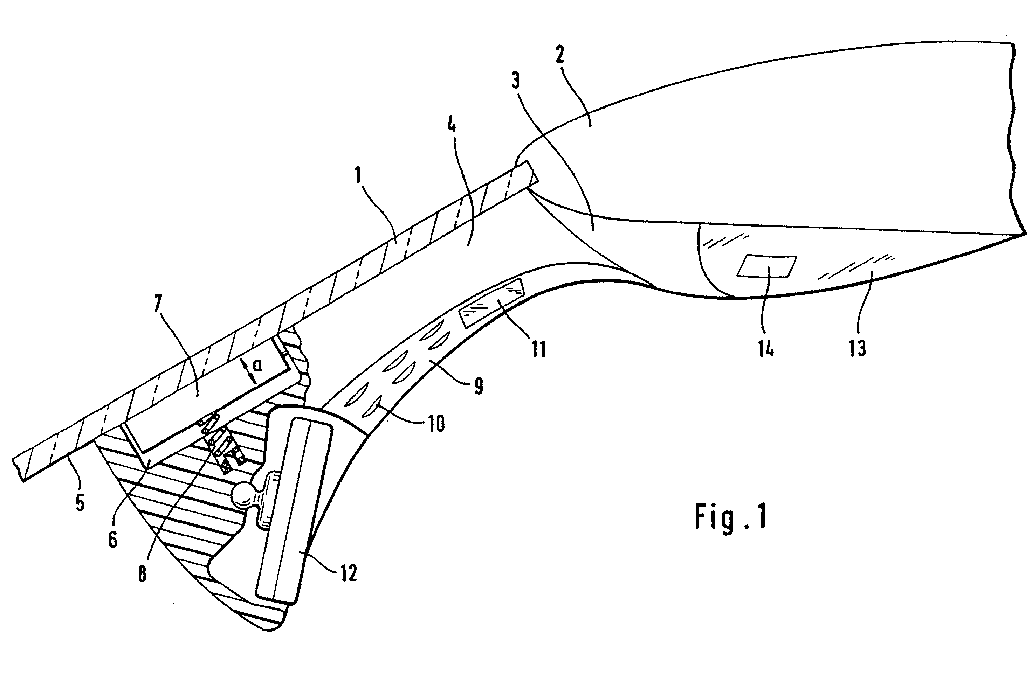

In Fig. 1 ist eine Windschutzscheibe 1 in an sich bekannter Weise mit dem Dach 2 eines Kraftfahrzeugs verbunden. Bei der Anordnung 2 nach Fig. 1 kann es sich um das Blech des Dachs oder auch um den am Dach des Fahrzeugs befestigten Fahrzeughimmel handeln. Am Dach 2 bzw. Fahrzeughimmel ist das Innenlichtmodul 3 befestigt. Die Art der Befestigung ist nicht Gegenstand der Erfindung und kann in der üblichen Vorgehensweise erfolgen. Von dem Innenlichtmodul 3 geht ein als schmale Nase 4 ausgestalteter Vorsprung ab, welcher sich an die Innenfläche 5 der Scheibe 1 anlegt. Die Nase 4 besitzt eine Aufnahmeöffnung 6, in der ein Regensensor 7 senkrecht zur Scheibeninnenfläche 5 in Richtung des Pfeiles a verschiebbar angeordnet ist. Eine Feder 8, die als Spiralfeder, aber auch als Blattfeder oder als ein anders ausgestaltetes Federmittel aufgebaut sein kann, stützt sich an dem Boden der Aufnahmeöffnung 6 ab und drückt den Regensensor 7 in geeigneter Weise gegen die Innenfläche 5 der Scheibe 1.

An der Oberfläche 9 des Moduls können noch Betätigungselemente 10 von Schaltern oder ein Display 11 angeordnet sein. Das Innenlichtmodul kann gleichzeitig auch noch einen Spiegel 12 aufnehmen, der verschwenkbar im Innenlichtmodul befestigt sein kann und als Rückspiegel oder Innenspiegel dienen kann. Schließlich ist das Innenlichtmodul noch mit der Innenleuchte 13 versehen, zu der auch ein oder mehrere Spots 14 gehören kann. Fig. 1 zeigt das Innenlichtmodul nur in stark vereinfachter Form. Dabei erstreckt sich das Innenlichtmodul im Bereich des Daches zum Betrachter hin und ist hier geschnitten. Dagegen liegt die Nase 4 unterhalb der Schnittebene, ist aber am unteren Ende aufgebrochen dargestellt, um die Führung des Regensensors 7 darzustellen.

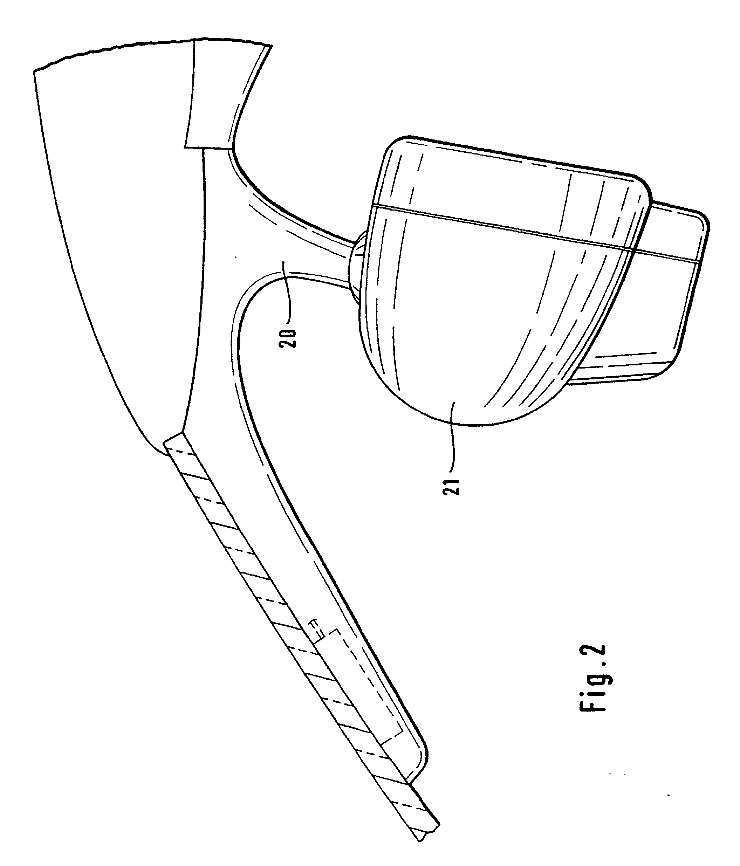

Fig. 2 zeigt eine etwas andere Darstellung des erfindungsgemäßen Innenlichtmoduls. Der wesentliche Unterschied besteht darin, daß über einen Arm 20 ein Gehäuse 21 gehalten ist, welches den Spiegel und/oder den Spot tragen kann. Für die Erfindung wichtig ist, daß das Innenlichtmodul den Regensensor aufnimmt, so daß mit der Montage des Innenlichtmoduls auch der Regensensor montiert ist.

## Patentansprüche

1. Innenlichtmodul (3), vorzugsweise oberhalb der Windschutzscheibe eines Kraftfahrzeugs am Fahrzeug montierbar, das mit einem im eingebauten Zustand in Richtung Windschutzscheibe (1) weisenden Vorsprung versehen ist, der einen an der Innenfläche (5) der Windschutzscheibe (1) angeordneten Regensensor (7) abdeckt, **dadurch gekennzeichnet, daß** der Regensensor in dem als schmale Nase (4) ausgestalten Vorsprung des Innenlichtmoduls (3) aufgenommen ist und die Nase (4) im eingebauten Zustand des Innenlichtmoduls (3) selbst eine gewisse Vorspannung hat, mit der sie den Regensensor (7) mit dessen die Detektoren tragender Seite gegen die Innenfläche der Windschutzscheibe drückt.

2. Innenlichtmodul nach einem der vorangegangenen Ansprüche, **dadurch gekennzeichnet, daß** es mit einem Anschlußfeld zum Verbinden der Anschlüsse des Innenlichtmoduls mit durch das Kraftfahrzeug geführten elektrischen Leitungen versehen ist, wobei an dem Anschlußfeld sowohl zu dem Regensensor (7) als auch zu dem Innenlicht (13) geführte Anschlüsse vorgesehen sind.

3. Innenlichtmodul nach Anspruch 2, **dadurch gekennzeichnet, daß** ein Teil der Anschlüsse dem Informationsaustausch zwischen Regensensor (7) mit anderen Baugruppen des Fahrzeugs und ein weiterer Teil der Anschlüsse der Stromversorgung des Regensensors und des Innenlichtes (13) zugeordnet sind und/oder dem Informationsaustausch des Innenlichtmoduls mit anderen Baugruppen des Fahrzeugs.

4. Innenlichtmodul nach einem der vorangegangenen Ansprüche, **dadurch gekennzeichnet, daß** die Länge der Nase (4) so groß gewählt ist, daß ihr den Regensensor (7) tragender freier Endabschnitt in einen Bereich der Windschutzscheibe (1) ragt, der auf der gegenüberliegenden Scheibenseite von dem Wischblatt des Wischers überstrichen wird.

5. Innenlichtmodul nach einem der vorangegangenen Ansprüche, **dadurch gekennzeichnet, daß** die Nase (4) mit einer Aufnahmeöffnung (6) versehen ist, in der der Regensensor (7) zur Scheibe hin offen eingefügt und fixiert ist.

6. Innenlichtmodul nach Anspruch 5, **dadurch gekennzeichnet, daß** der Regensensor (7) in der Aufnahmeöffnung (6) senkrecht zur Windschutzscheibe (1) bewegbar geführt ist und daß eine Federeinrichtung (8) den Regensensor in Bewegungsrichtung (a) zur Scheibe hin vorspannt.

7. Innenlichtmodul nach einem der vorangegangenen Ansprüche, **dadurch gekennzeichnet, daß** außer dem Regensensor (7) noch weitere Baugruppen wie Spiegel (12), Display (11) oder Schalter an dem Modul, insbesondere der Nase (4), befestigt sind.

8. Innenlichtmodul nach einem der vorangegangenen Ansprüche, **dadurch gekennzeichnet, daß** es an dem Dach bzw. Himmel (2) des Kraftfahrzeugs montierbar ist.

## Claims

1. Inside light module (3) which is preferably mounted above the windshield of a motor vehicle, wherein the insids light module is provided with a projection that points in the direction of the windshield (1) when installed, which covers a rain sensor (7) arranged on the inner surface (5) of the windshield (1), **characterized in that**, the rain sensor (7) is accommodated in the projection (4) of the inside light module (3) realized in the form of a narrow heel, and that the heel presses the side of the sensor (7) which carries the detectors against the inner surface (5) of the windshield (1) under prestress when the inside light module is installed.

2. Inside light module according to one of the previous claims, **characterized by** the fact that it is provided with a terminal panel for connecting the connections of the inside light module with electrical lines that extend through the motor vehicle, wherein connections that lead to the rain sensor (7) as well as to the inside light (13) are provided on the terminal panel.

3. Inside light module according to Claim 2, **characterized by** the fact that some of the connections are assigned to the exchange of information between the rain sensor (7) and other components of the motor vehicle, and by the fact that other connections are assigned to the power supply of the rain sensor and the inside light (13) and/or the exchange of information between the inside light module and other components of the motor vehicle.

4. Inside light module according to one of the previous claims, **characterized by** the fact that the heel (4) has such a length that its free end section which carries the rain sensor (7) protrudes into a region of the windshield (1) that is swept by the wiper blade of the windshield wiper system on the opposite side of the windshield.

5. Inside light module according to one of the previous claims, **characterized by** the fact that the heel (4) is provided with a receptacle opening (6), in which the rain sensor (7) is arranged and fixed so that it is open toward the windshield.

6. Inside light module according to Claim 5, **characterized by** the fact that the rain sensor (7) can be moved perpendicularly to the windshield (1) in the receptacle opening (6), and by the fact that a spring device (8) prestresses the rain sensor in the direction of movement (a) toward the windshield.

7. Inside light module according to one of the previous claims, **characterized by** the fact that other components, e.g., a mirror (12), a display (11) or switches, are mounted on the module, in particular, the heel (4), in addition to the rain sensor (7).

8. Inside light module according to one of the previous claims, **characterized by** the fact that it can be respectively mounted on the roof or the inside roof lining (2) of the motor vehicle.

## Revendications

1. Module d'éclairage intérieur (3), pouvant de préférence être monté au-dessus du pare-brise d'un véhicule automobile, qui est doté d'une saillie dirigée à l'état monté vers le du pare-brise (1) et recouvrant un détecteur de pluie (7) disposé sur la face intérieure (5) du pare-brise (1), **caractérisé en ce que** le détecteur de pluie est reçu dans la saillie, réalisée sous forme d'étroit ergot (4), du module d'éclairage intérieur (3), et l'ergot (4) possède lui-même, à l'état monté du module d'éclairage intérieur (3), une certaine précontrainte par laquelle il presse le détecteur de pluie (7), par son côté portant les capteurs, contre la face intérieure du pare-brise.

2. Module d'éclairage intérieur selon la revendication 1, **caractérisé en ce qu'**il est doté d'un panneau de branchement pour relier les branchements du module d'éclairage intérieur à des lignes électriques dirigées à travers le véhicule automobile, des branchements menant aussi bien au détecteur de pluie (7) qu'à l'éclairage intérieur (13) étant prévus sur le panneau de branchement.

3. Module d'éclairage intérieur selon la revendication 2, **caractérisé en ce qu'**une partie des branchements est affectée à l'échange d'informations entre le détecteur de pluie (7) et d'autres unités de construction du véhicule et une autre partie des branchements est affectée à l'alimentation électrique du détecteur de pluie et de l'éclairage intérieur (13) et/ou l'échange d'informations entre le module d'éclairage intérieur et d'autres unités du véhicule.

4. Module d'éclairage intérieur selon l'une quelconque des revendications précédentes, **caractérisé en ce que** la longueur de l'ergot (4) est choisie suffisamment grande pour que sa partie terminale libre portant le détecteur de pluie (7) dépasse dans une région du pare-brise (1) qui est balayée, sur le côté opposé du pare-brise, par le balai d'essuie-glace.

5. Module d'éclairage intérieur selon l'une quelconque des revendications précédentes, **caractérisé en ce que** l'ergot (4) est doté d'une ouverture réceptrice (6), dans laquelle le détecteur de pluie (7) est inséré et immobilisé de façon ouverte vers le pare-brise.

6. Module d'éclairage intérieur selon la revendication 5 **caractérisé en ce que** le détecteur de pluie (7) est guidé en déplacement perpendiculairement au pare-brise (1) dans l'ouverture réceptrice (6), et **en ce qu'**un ensemble de ressort (8) précontraint le détecteur de pluie vers le pare-brise dans la direction de déplacement (a).

7. Module d'éclairage intérieur selon l'une quelconque des revendications précédentes, **caractérisé en ce qu'**en plus du détecteur de pluie (7), d'autres unités comme un rétroviseur (12), un afficheur (11) ou un commutateur sont fixées sur le module, notamment sur l'ergot (4).

8. Module d'éclairage intérieur selon l'une quelconque des revendications précédentes, **caractérisé en ce qu'**il peut être monté sur le toit ou encore sur l'habillage de plafond (2) du véhicule automobile.
